# EUROPEAN PATENT APPLICATION

(11) **EP 3 125 188 A1**
(43) Date of publication of application: **01.02.2017**
(21) Application number: 16181897.6
(22) Date of filing: 29.07.2016
(51) Int. Cl.: G06Q 50/00, G06K 9/00

(54) **METHOD AND DEVICE FOR DETERMINING ASSOCIATED USER**

(30) Priority: 31.07.2015 CN 201510463635
(71) Applicant: Xiaomi Inc., Beijing 100085 (CN)
(72) Inventor: ZHANG, Tao, Haidian District, Beijing 100085 (CN); LONG, Fei, Haidian District, Beijing 100085 (CN); CHEN, Zhijun, Haidian District, Beijing 100085 (CN)
(74) Representative: Sadler, Peter Frederick

(57) **Abstract**

A method and device for determining an associated user are provided. The method for determining an associated user includes: acquiring a face album, the face album including face sets of multiple users (S100); determining a target user in the face album, and screening out at least one candidate associated user of the target user from the face album (S102); and acquiring attribute information of the at least one candidate associated user, determining an associated user of the target user according to the attribute information, and setting tag information for the associated user(S103). (FIG. 1)

## Description

### TECHNICAL FIELD

The present disclosure generally relates to the field of technical processing of images, and more particularly, to a method and device for determining an associated user.

### BACKGROUND

Along with rapid development of mobile terminal technology, various mobile terminals, such as mobile phones, have become widespread, and moreover, their functionality has grown more and more powerful. For example, a user may now take a photo with a mobile phone, and may share the photo with friends.

Along with an increasing number of photos being taken, when a user wants to create a family album and the like, it is needed to manually find associated users of one or some users and then execute the subsequent operation of creating the family album and the like according to the associated users. For example, if there is only a photo album associated with a baby, it is needed to find users associated with the baby, i.e. his/her father and mother, from a potentially massive number of photos, to create a family album associated with the father and mother.

However, the operation of manually determining an associated user is relatively tedious, and may waste a great deal of the user's time.

The embodiments of the present disclosure are presented to solve the problem that the operation of determining an associated user at present is tedious.

### SUMMARY

Accordingly, the present invention provides a method and device for determining an associated user, in accordance with claims which follow.

According to a first aspect, the invention relates to a method for determining an associated user is provided, which may include:
acquiring a face album, the face album including face sets of multiple users;
determining a target user in the face album, and screening out at least one candidate associated user of the target user from the face album; and
acquiring attribute information of the at least one candidate associated user, determining an associated user of the target user according to the attribute information, and setting tag information for the associated user.

In this way, an implementation process is rapid and simple, tedious operation of the user is avoided, and time is greatly saved for the user.

In one embodiment, the screening out at least one candidate associated user of the target user from the face album may include:
acquiring face source photos of all the users in the face album, and comparing the acquired face source photos of users except the target user with face source photos of the target user; and
determining a user, the number of whose face source photos the same as those of the target user, is more than a preset number as the at least one candidate associated user.

Due to the screening operation, it is simple and easy to determine a candidate associated user.

In one embodiment, the acquiring attribute information of the at least one candidate associated user and determining an associated user of the target user according to the attribute information may include:
acquiring sex and age information of the at least one candidate associated user, and deleting a candidate associated user not meeting an age requirement according to the age information; and
determining whether the number of a remaining candidate associated user exceeds the number of the associated user or not according to sex of the remaining candidate associated user, and if the number of the remaining candidate associated user does not exceed the number of the associated user, then determining the remaining candidate associated user as the associated user, otherwise, determining the associated user according to a preset condition.

This manner is simple and high in accuracy.

In one embodiment, the acquiring sex and age information of the at least one candidate associated user may include:
collecting training samples, extracting characteristics of the training samples, and training a classifier according to the characteristics, the characteristics including a gabor characteristic and the classifier including a Support Vector Machine (SVM) classifier; and
acquiring sex and an age group of the at least one candidate associated user by the classifier.

When such a manner is adopted to determine the age group, high accuracy is achieved.

In one embodiment, the determining the associated user according to a preset condition may include:
obtaining face number(s) of the remaining candidate associated user, and determining a candidate associated user with a largest face number as the associated user.

Such a manner of determining an associated user according to a preset condition is simple and high in accuracy.

In one embodiment, the acquiring sex and an age group of the at least one candidate associated user by the classifier may include:
for each candidate associated user, acquiring age of each face of a current candidate associated user by the classifier, acquiring photo taking time corresponding to the each face, calculating birth time corresponding to the each face according to the age and the photo taking time, and determining an age group to which the current candidate associated user belongs according to the calculated birth time; and
for each candidate associated user, acquiring sex corresponding to the each face of the current candidate associated user by the classifier, determining the acquired sex as sex of the current candidate associated user if the acquired sex(es) is (are) the same, and if the acquired sexes are different, then making a statistic on the numbers of faces, corresponding to different sexes, of the current candidate associated user and determining sex corresponding to a larger number of faces as the sex of the current candidate associated user.

In this way, high accuracy is achieved.

In one embodiment, the acquiring age and sex of each face of a current candidate associated user by the classifier may include:
for the each face of the current candidate associated user, acquiring age and sex of a current face of the current candidate associated user, calculating light and posture information of the current face, determining the acquired age and sex as age and sex of the current face if a calculation result meets a light and posture requirement, storing the current face and the age and sex of the current face in a database, and if the calculation result does not meet the light and posture requirement, then obtaining a matched face of the current face from the database, and determining age and sex of the matched face as the age and sex of the current face.

In this way, identification accuracy of the sex and age of the current face is ensured.

According to a second aspect, the invention relates to a device for determining an associated user is provided, which may include:
an acquisition module, configured to acquire a face album, the face album including face sets of multiple users;
a determination and screening module, configured to determine a target user in the face album acquired by the acquisition module, and screen out at least one candidate associated user of the target user from the face album; and
a determination and setting module, configured to acquire attribute information of the at least one candidate associated user screened out by the determination and screening module, determine an associated user of the target user according to the attribute information, and set tag information for the associated user.

In this way, an implementation process is rapid and simple, tedious operation of the user is avoided, and time is greatly saved for the user.

In one embodiment, the determination and screening module may include:
an acquisition and comparison sub-module, configured to acquire face source photos of all the users in the face album, and compare the acquired face source photos of users except the target user with face source photos of the target user; and
a determination sub-module, configured to determine a user, the number of whose face source photos the same as those of the target user, is more than a preset number as the at least one candidate associated user.

Due to the screening operation, it is simple and easy to determine a candidate associated user.

In one embodiment, the determination and setting module may include:
an acquisition and deletion sub-module, configured to acquire sex and age information of the at least one candidate associated user, and delete a candidate associated user not meeting an age requirement according to the age information; and
a judgment and determination sub-module, configured to determine whether the number of a remaining candidate associated user exceeds the number of the associated user or not according to sex of the remaining candidate associated user, and if the number of the remaining candidate associated user does not exceed the number of the associated user, then determine the remaining candidate associated user as the associated user, otherwise, determine the associated user according to a preset condition.

These sub-modules of the determination and setting module enable the process of determining an associated user to be implemented more simply and accurately.

In one embodiment, the acquisition and deletion sub-module may include:
a collection, extraction and training unit, configured to collect training samples, extract characteristics of the training samples, and train a classifier according to the characteristics, the characteristics including a gabor characteristic and the classifier including an SVM classifier; and
an acquisition unit, configured to acquire sex and an age group of the at least one candidate associated user by the classifier trained by the collection, extraction and training unit.

Due to the units in the acquisition and deletion sub-module, high accuracy is achieved for determining an age group.

In one embodiment, the judgment and determination sub-module may be configured to:
obtain face number(s) of the remaining candidate associated user, and determine a candidate associated user with a largest face number as the associated user.

In this way, an associated user can be determined more simply and accurately.

In one embodiment, the acquisition unit may be configured to:
for each candidate associated user, acquire age of each face of a current candidate associated user by the classifier, acquire photo taking time corresponding to the each face, calculate birth time corresponding to the each face according to the age and the photo taking time, and determine an age group to which the current candidate associated user belongs according to the calculated birth time; and
for each candidate associated user, acquire a sex corresponding to the each face of the current candidate associated user by the classifier, determine the acquired sex as sex of the current candidate associated user if the acquired sex(es) is (are) the same, and if the acquired sexes are different, then make a statistic on the number of faces, corresponding to different sexes, of the current candidate associated user and determine sex corresponding to a larger number of faces as the sex of the current candidate associated user.

Since the sex and age information corresponding to all the faces of each candidate associated user is obtained, and then the sexes and age groups of the corresponding candidate associated users are determined according to the sex and age information corresponding to all the faces, high accuracy is achieved.

In one embodiment, the acquisition unit may be configured to:
for the each face of the current candidate associated user, acquire age and sex of a current face of the current candidate associated user, calculate light and posture information of the current face, determine the acquired age and sex as age and sex of the current face if a calculation result meets a light and posture requirement, store the current face and the age and sex of the current face in a database, and if the calculation result does not meet the light and posture requirement, obtain a matched face of the current face from the database, and determine an age and sex of the matched face as the age and sex of the current face.

In this way, identification accuracy of the sex and age of the current face is ensured.

According to a third aspect, the invention relates to a device for determining an associated user is provided, which may include:
a processor; and
a memory configured to store executable instructions of the processor,
wherein the processor may be configured to:
acquire a face album, the face album including face sets of multiple users;
determine a target user in the face album, and screen out at least one candidate associated user of the target user from the face album; and
acquire attribute information of the at least one candidate associated user, determine an associated user of the target user according to the attribute information, and set tag information for the associated user.

It is to be understood that the above general description and detailed description below are only exemplary and explanatory and not intended to limit the present disclosure.

### BRIEF DESCRIPTION OF THE DRAWINGS

The accompanying drawings, which are incorporated in the specification and constitute a part of the specification, illustrate embodiments consistent with the present disclosure and, together with the description, serve to explain the principles of the present disclosure.
Fig. 1 is a flow chart of a method for determining an associated user according to an exemplary embodiment;
Fig. 2a is a schematic diagram of a face album according to an exemplary embodiment;
Fig. 2b is a schematic diagram of a face set according to an exemplary embodiment;
Fig. 3 is a scenario chart of a method for determining an associated user according to an exemplary embodiment;
Fig. 4a is a flow chart of acquiring attribute information of a user according to an exemplary embodiment;
Fig. 4b is a flow chart of acquiring age information of a current candidate associated user according to an exemplary embodiment;
Fig. 5 is a flow chart of acquiring age of a face according to an exemplary embodiment;
Fig. 6 is a block diagram of a device for determining an associated user according to an exemplary embodiment;
Fig. 7 is a block diagram of another device for determining an associated user according to an exemplary embodiment;
Fig. 8 is a block diagram of still another device for determining an associated user according to an exemplary embodiment;
Fig. 9 is a block diagram of yet another device for determining an associated user according to an exemplary embodiment; and
Fig. 10 is a block diagram of a determination device applicable to an associated user according to an exemplary embodiment.

### DETAILED DESCRIPTION

The exemplary embodiments will be described in detail herein and examples of the exemplary embodiments are illustrated in the accompanying drawings. Unless expressed otherwise, the same numbers in different accompanying drawings represent the same or similar elements when the accompanying drawings are described hereinafter. The implementation modes described in the following exemplary embodiments do not represent all the implementation modes consistent with the present disclosure. On the contrary, they are only examples of devices and methods as described in details in the appended claims and consistent with some aspects of the present disclosure.

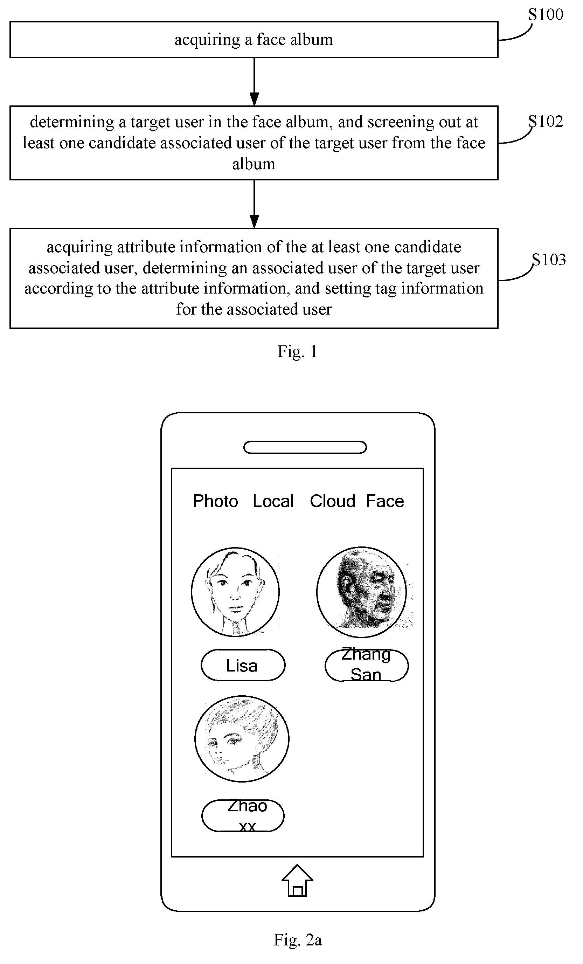

Fig. 1 is a flow chart of a method for determining an associated user according to an exemplary embodiment. As shown in Fig. 1, the method for determining an associated user may be applicable to a mobile terminal, and the mobile terminal including, but not limited to, a mobile phone. The method includes the following Step S101 to Step S103.

In step S101, a face album is acquired, the face album including face sets of multiple users.

In the embodiment, if the mobile terminal, such as a mobile phone, opens "face album", the mobile phone may acquire a face album from a server, wherein the face album may include the face sets of the multiple users.

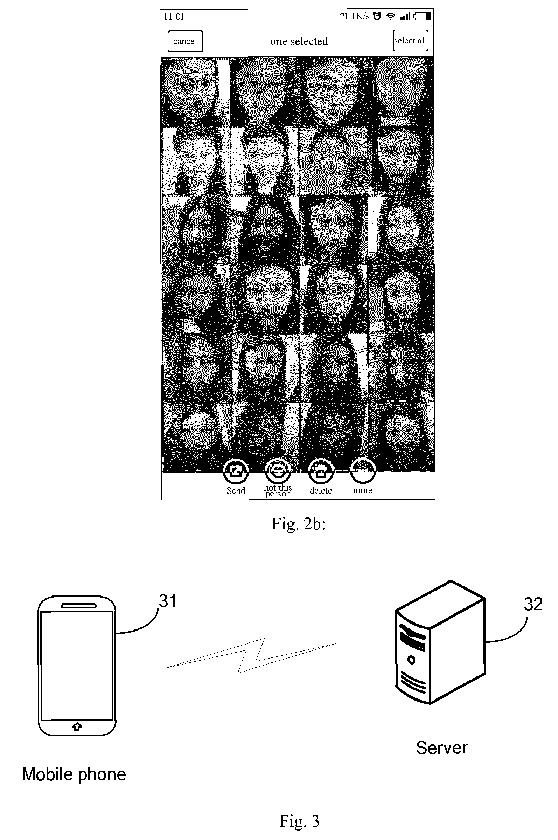

Fig. 2a illustrates an example of the face album, the face album includes the face sets of the multiple users, and the face set of a certain user may be shown in Fig. 2b.

In step S102, a target user in the face album is determined, and at least one candidate associated user of the target user is selected by screening the face album to screen out potential candidate associated users in the face album that do not meet certain criteria.

In the embodiment, the target user may be a baby, and after the face album is acquired, a face set of the baby may be identified from the face album, and in addition, the target user may be determined according to the number of faces in the face set of the baby. For example, if there are face sets of two babies in a current face album, the face set of the first baby including 4 faces and the face set of the second baby including 50 faces, then the second baby may be determined as the target user.

After the target user is determined, at least one candidate associated user of the target user may be selected from the face album in, but not limited to, the following manner of: acquiring face source photos of all the users in the face album, comparing the acquired face source photos of the users except the target user with the face source photos of the target user, and determining users for whom the number of face source photos that are the same as those of the target user is more than a preset number as candidate associated users. Candidates that do not meet the requirements are screened out.

Here, the face source photos refer to photos with faces. If photo 1 includes face 1 and face 2, photo 1 is the source photo of face 1 and face 2, and if photo 2 includes face 3, photo 2 is the source photo of face 3. The preset number may be flexibly set according to a requirement, and for example, may be set to be 10, 15 and the like.

It is assumed that the current face album includes face sets of 5 users in total, 1-5, and user 1 is a target user; face source photos of the 5 users are acquired, and the face source photos of users 2-5 are compared with the face source photos of user 1 respectively; it is supposed that user 2 and user 1 are discovered to have 2 same face source photos, that is, user 2 and user 1 have 2 group photos; user 3 and user 1 are discovered to have 30 same face source photos, that is, user 3 and user 1 have 30 group photos; user 4 and user 1 are discovered to have 33 same face source photos, that is, user 4 and user 1 have 33 group photos; user 5 and user 1 are discovered to have 20 same face source photos, that is, user 5 and user 1 have 20 group photos; and if it is assumed that the preset number is 10, then user 3, user 4 and user 5 may be determined as candidate associated users of the target user.

In step S103, attribute information of the at least one candidate associated user is acquired, an associated user of the target user is determined according to the attribute information, and tag information is set for the associated user.

After the at least one candidate associated user of the target user is determined, the attribute information of the at least one candidate associated user may be acquired to determine the associated user of the target user according to the attribute information.

For example, sex and age information of the at least one candidate associated user may be acquired, a candidate associated user not meeting an age requirement is deleted, or removed from further consideration, according to the age information, then whether the number of a remaining candidate associated user exceeds the number of the associated user or not is determined according to the sex of the remaining candidate associated user, the remaining candidate associated user is determined as the associated user if the number of the remaining candidate associated user does not exceed the number of the associated user, otherwise, the associated user is determined according to a preset condition, such as the face number(s) of the at least one candidate associated user.

Description will now be given on the basis of the above example. If user 3 is a male and belongs to an age group of 10-15, user 4 is a female and belongs to an age group of 25-30 and user 5 is a male and belongs to an age group of 28-35, user 3 is deleted because the age group of user 3 does not meet the age requirement, and user 4 and user 5 are determined as the associated users of the target user because user 4 and user 5 may be determined to meet a requirement on the number of the associated users according to the sexes of user 4 and user 5, for example, user 4 is the mother of the target user and user 5 is the father of the target user.

However, if user 3 is a male and belongs to the age group of 25-30, users 3-5 all meet the age requirement, then it is needed to further select between user 3 and user 5 according to a preset condition because user 3 and user 5 are both males and exceed the preset number of the associated users of a particular sex. For example, the face numbers of user 3 and user 5 may be obtained, and user 3 is determined as the associated user of the target user because the face number (30) of user 3 is more than the face number (20) of user 5.

The manner of determining an associated user according to a preset condition is simple and high in accuracy.

After the associated user of the target user is determined, the tag information may be set for the associated user to subsequently execute operation according to the tag information.

Here, the tag information may be "father of the baby" or "mother of the baby", and may also be a marker representative of "father of the baby" or "mother of the baby". In addition, the mobile terminal may display the tag information, for example, the tag information may be displayed at the bottom or top of a user face in the face album, the tag information may also be displayed on the user face, for example, the tag information is displayed at a position such as a right upper corner of the user face, and it is to be noted that there are no specific limits to a pattern and a position of the tag information.

Furthermore, after the tag information is set for the associated user, if the user triggers operation of creating a family album and the like, the mobile terminal may simultaneously extract the faces of the target user and the associated user of the target user instead of manually finding the associated user of the target user and then extracting the faces of the associated user one by one, therefore, the implementation is simple and rapid.

The present disclosure is exemplarily described below with reference to Fig. 3. As shown in Fig. 3, a user may take many photos of a baby and himself/herself with a mobile phone 31, and may simultaneously upload the photos to a server 32, the mobile phone 31 may acquire a face album from the server after the current user clicks to open option "face album", and in addition, the mobile phone 31 may automatically identify a target user, for example, the baby of the current user, and select at least one candidate associated user of the target user from the face album, then acquire attribute information of the at least one candidate associated user and determine associated users of the target user, i.e. the father and mother of the baby, according to the attribute information, set tag information for the father and mother of the baby, thereby facilitating subsequent operation performed according to the tag information.

According to the above embodiment of the method for determining an associated user, the face album is acquired, the target user in the face album is determined, the at least one candidate associated user of the target user is selected from the face album, then the attribute information of the at least one candidate associated user is acquired, the associated users of the target user are determined according to the attribute information, and the tag information is finally set for the associated users, so that an implementation process is rapid and simple, tedious operation of the user is avoided, and time is greatly saved for the user.

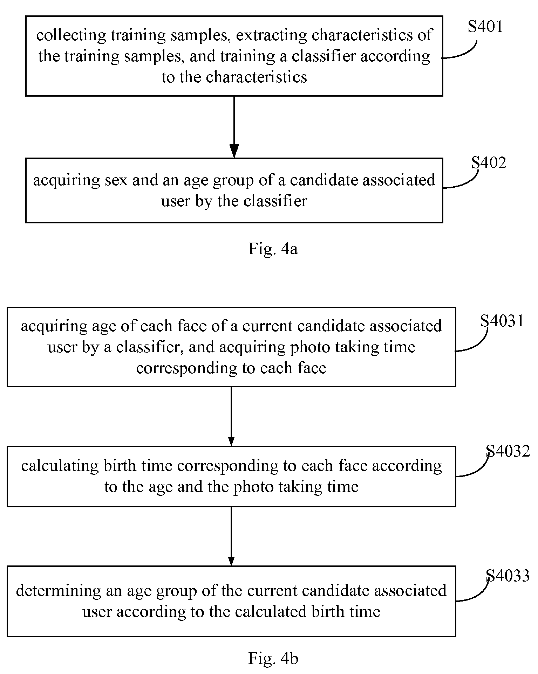

Fig. 4a is a flow chart of acquiring attribute information of a user according to an exemplary embodiment. According to the embodiment, sex and age information of a candidate associated user may be acquired, and as shown in Fig. 4a, the process includes:
In step S401, training samples are collected, characteristics of the training samples are extracted, and a classifier is trained according to the characteristics.

The sex and age information is acquired in the embodiment, so that it is needed to collect sex training samples and age training samples, extract the characteristics of the corresponding training samples, the characteristics including, but not limited to, a gabor characteristic, and the corresponding classifier is trained according to the characteristics, the classifier including, but not limited to, an SVM classifier.

Here, the gabor characteristic is a local characteristic measurement method for an image, and is mainly adopted to describe a local texture characteristic.

In step S402, the sex and age group of the at least one candidate associated user by the classifier are acquired.

The face album includes multiple faces of a candidate associated user, so that the sex and age information of all the faces of each candidate associated user may be acquired by the corresponding classifier, a statistic on the sex and age information of all the faces may be made and the sexes and age groups of the corresponding candidate associated users may be obtained according to statistical results in the embodiment.

For example, for each candidate associated user, the process of acquiring the age information of the current candidate associated user may, as shown in Fig. 4b, include:
Step S4031: acquiring age of each face of the current candidate associated user, and acquiring photo taking time corresponding to the each face;
Step S4032: calculating birth time corresponding to the each face according to the age and the time of taking the photo. The birth time indicates the date of birth determined for the subject face of the photo and may include a birth date and/or birth year. The time of taking the photo indicates when the photo was taken and may include a date and/or year of taking the photo; and
Step S4033: determining the age group of the current candidate associated user according to the calculated birth time by the classifier.

It is supposed that the current candidate associated user has 40 faces, wherein birth time corresponding to 10 faces is 1988, birth time corresponding to 8 faces is 1990, birth time corresponding to 7 faces is 1989, birth time corresponding to 8 faces is 1987, birth time corresponding to 2 faces is 1980, birth time corresponding to 2 faces is 1981, birth time corresponding to 2 faces is 1995 and birth time corresponding to 1 face is 1996; and then the age group of the current candidate associated user is determined to be 25-28.

When such a manner is adopted to determine the age group, high accuracy is achieved.

For another example, for each candidate associated user, the classifier is used to acquire sex corresponding to each face of the current candidate associated user, determine the acquired sex as the sex of the current candidate associated user if the acquired sexes are the same, and if the acquired sexes are different, make a statistic on the number of the faces, corresponding to different sexes, of the current candidate associated user and determine the sex corresponding to a larger number of faces as the sex of the current candidate associated user.

It is supposed that the current candidate associated user has 40 faces, wherein the sex corresponding to 38 faces is male, and the sex corresponding to 2 faces is female; and then the sex of the current candidate associated user is determined to be male.

When such a manner is adopted to determine the sex, high accuracy is achieved.

According to the embodiment, the sex and age information corresponding to all the faces of each candidate associated user is obtained, and then the sexes and age groups of the corresponding candidate associated users are determined according to the sex and age information corresponding to all the faces, so that high accuracy is achieved.

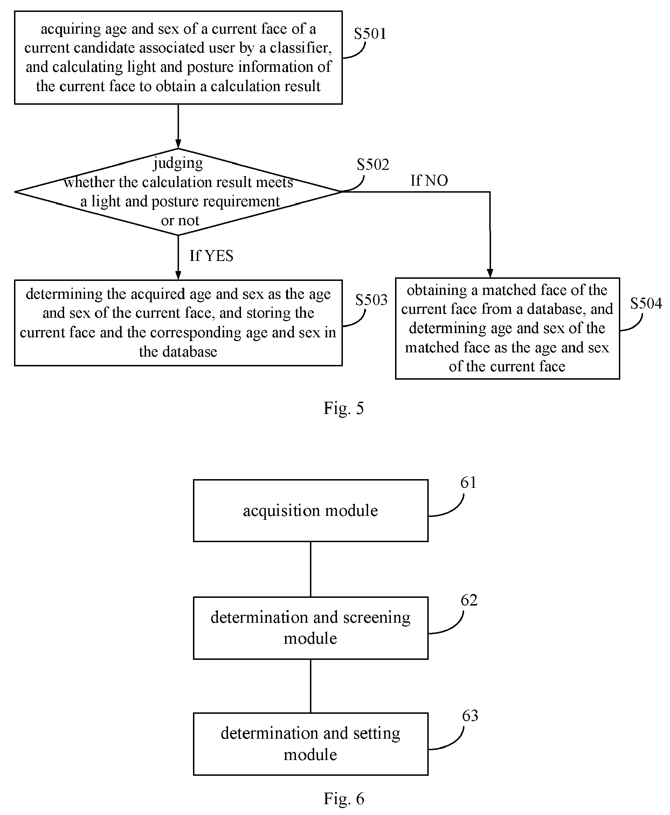

Fig. 5 is a flow chart of acquiring age of a face, according to an exemplary embodiment. As shown in Fig. 5, the step of acquiring the age and sex of the current face for each face of the current candidate associated user may include:
Step S501: acquiring the age and sex of the current face of the current candidate associated user by the classifier, and calculating light and posture information of the current face.

The angles, light and the like of shooting may usually cause inaccurate identification results of the sexes and ages of different faces of the same user. In order to solve the problem, it is needed to calculate the light and posture information of the current face in the embodiment.

Here, the light information may be calculated by an average value and variance of pixel gray values.

In step S502, whether a calculation result meets a light and posture requirement or not is determined, step S503 is executed if the calculation result meets the light and posture requirement, otherwise, step S504 is executed.

In the embodiment, whether a posture of the user is a front posture or not and whether the average value of the pixel gray values is within a preset range, for example, 50-100, or not may be determined, the current face is determined to meet the light and posture requirement if the posture of the user is the front posture and the average value of the pixel gray value is ranged from 50 to 100, otherwise the current face is determined not to meet the light and posture requirement.

Here, whether the posture of the user is the front posture or not may be determined in multiple manners, for example, positions of a few points, such as positions of the left eye and the right eye, on the current face may be extracted, then whether the left eye and the right eye are symmetric or not is determined, and if the left eye and the right eye are symmetric, it is indicated that the posture of the user is the front posture.

In step S503, the acquired age and sex are determined as the age and sex of the current face, and the current face and its corresponding age and sex are stored in a database.

If the current face meets the light and posture requirement, the acquired age and sex may be determined as the age and sex of the current face, and the current face and its corresponding age and sex may be stored in the database for subsequent matched use.

In step S504, a matched face of the current face is obtained from the database, and an age and sex of the matched face are determined as the age and sex of the current face.

If the current face does not meet the light and posture requirement, for example, when the current face is a lateral face and light is dark, it is not so accurate to determine the acquired age and sex as the age and sex of the current face, and it is needed to obtain the matched face of the current face from the database and determine the age and sex of the matched face as the age and sex of the current face to improve the accuracy.

According to the embodiment, when the current face meets the light and posture requirement, the acquired age and sex are directly determined as the age and sex of the current face, while when the current face does not meet the light and posture requirement, the matched face of the current face is obtained from the database, and the age and sex of the matched face are determined as the age and sex of the current face, so that identification accuracy of the sex and age of the current face is ensured.

Possible examples of certain terms used herein will now be given as a means to provide further understanding.

An associated user may, for example, be a user associated with a target user, for whom the photos of the associated user and the target user are to be incorporated into a common album / folder. An associated user may be a relation to the target user, or they may be associated by other means, such as being linked as friends, connections, or equivalent, on a social media platform.

As an example, a "face album" may contain a number of photographs of different users, and each photograph includes at least one of the user's faces. A "face set" may, for example, be a subset of the photos within the face album. Each "face set" applies to a particular user and includes photos that feature the face of that particular user, but these photos may, optionally, also include the faces of other users.

The "face source photos" may be photos of users that are compared to determine candidate associated users. The face source photos may, optionally, be photos contained within the face sets.

The "face number" may, for example, be the number of face source photos in which a given candidate associated user appears with the target user.

Corresponding to the abovementioned embodiment of the method for determining an associated user, the present disclosure further provides an embodiment of a device for determining an associated user.

Fig. 6 is a block diagram of a device for determining an associated user according to an exemplary embodiment. As shown in Fig. 6, the device for determining an associated user includes an acquisition module 61, a determination and screening module 62 and a determination and setting module 63.

The acquisition module 61 is configured to acquire a face album, the face album including face sets of multiple users.

The determination and screening module 62 is configured to determine a target user in the face album acquired by the acquisition module 61, and screen out users to selected at least one candidate associated user of the target user from the face album.

The determination and setting module 63 is configured to acquire attribute information of the at least one candidate associated user selected by the determination and screening module 62, determine an associated user of the target user according to the attribute information, and set tag information for the associated user.

An associated user determination process of the device for determining an associated user shown in Fig. 6 may refer to the embodiment shown in Fig. 1, and will not be repeated here.

According to the embodiment of the device for determining an associated user, the acquisition module acquires the face album, the determination and screening module determines the target user in the face album and selects the at least one candidate associated user of the target user from the face album, and the determination and setting module acquires the attribute information of the at least one candidate associated user, determines an associated user of the target user according to the attribute information and sets the tag information for the associated user, so that an implementation process is rapid and simple, tedious operation of the user is avoided, and time is greatly saved for the user.

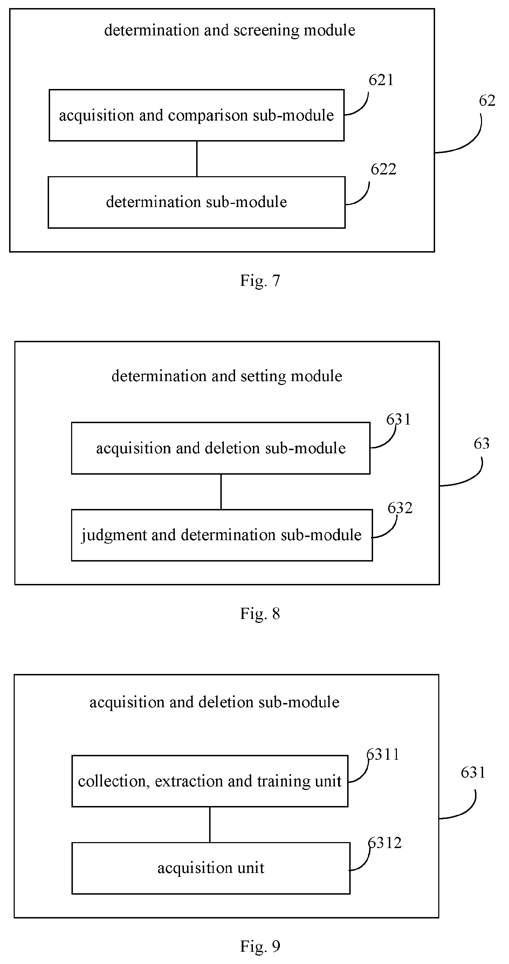

Fig. 7 is a block diagram of another device for determining an associated user according to an exemplary embodiment. As shown in Fig. 7, on the basis of the embodiment shown in Fig. 6, the determination and screening module 62 may include an acquisition and comparison sub-module 621 and a determination sub-module 622.

The acquisition and comparison sub-module 621 is configured to acquire face source photos of all the users in the face album, and compare the acquired face source photos of users except the target user with face source photos of the target user.

The determination sub-module 622 is configured to determine a user, the number of whose face source photos the same as those of the target user, is more than a preset number as the at least one candidate associated user.

An associated user determination process of the device for determining an associated user shown in Fig. 7 may refer to the corresponding part of the embodiment shown in Fig. 1, and will not be repeated here.

According to the embodiment, the manner of determining a candidate associated user is simple and easy to implement.

Fig. 8 is a block diagram of still another device for determining an associated user according to an exemplary embodiment. As shown in Fig. 8, on the basis of the embodiment shown in Fig. 6, the determination and setting module 63 may include an acquisition and deletion sub-module 631 and a judgment and determination sub-module 632.

The acquisition and deletion sub-module 631 is configured to acquire sex and age information of the at least one candidate associated user, and delete a candidate associated user not meeting an age requirement according to the age information.

The judgment and determination sub-module 632 is configured to determine whether the number of a remaining candidate associated user exceeds the number of the associated user or not according to the sex of the remaining candidate associated user, and if the number of the remaining candidate associated user does not exceed the number of the associated user, then determine the remaining candidate associated user as the associated user, otherwise, determine the associated user according to a preset condition.

In one embodiment, the judgment and determination sub-module 632 may be configured to obtain the face number(s) of the remaining candidate associated user, and determine a candidate associated user with the largest face number as the associated user.

An associated user determination process of the device for determining an associated user shown in Fig. 8 may refer to the corresponding part of the embodiment shown in Fig. 1, and will not be repeated here.

According to the embodiment, the manner of determining an associated user according to the attribute information of a candidate associated user is simple and easy to implement.

Fig. 9 is a block diagram of yet another device for determining an associated user according to an exemplary embodiment. As shown in Fig. 9, on the basis of the embodiment shown in Fig. 8, the acquisition and deletion sub-module 631 may include a collection, extraction and training unit 6311 and an acquisition unit 6312.

The collection, extraction and training unit 6311 is configured to collect training samples, extract characteristics of the training samples, and train a classifier according to the characteristics, the characteristics including a gabor characteristic and the classifier including an SVM classifier.

The acquisition unit 6312 is configured to acquire the sex and age group of the at least one candidate associated user by the classifier trained by the collection, extraction and training unit 6311.

In one embodiment, the acquisition unit 6312 may be configured to: for each candidate associated user, acquire age of each face of a current candidate associated user by the classifier, acquire photo taking time corresponding to the each face, calculate birth time corresponding to the each face according to the age and the photo taking time, and determine an age group to which the current candidate associated user belongs according to the calculated birth time; and for each candidate associated user, acquire sex corresponding to the each face of the current candidate associated user by the classifier, determine the acquired sex as the sex of the current candidate associated user if the acquired sex(es) is (are) the same, and if the acquired sexes are different, then make a statistic on the number of faces, corresponding to different sexes, of the current candidate associated user and determine sex corresponding to a larger number of faces as the sex of the current candidate associated user.

In another embodiment, the acquisition unit 6312 may be configured to: for the each face of the current candidate associated user, acquire the age and sex of a current face of the current candidate associated user, calculate light and posture information of the current face, determine the acquired age and sex as the age and sex of the current face if a calculation result meets a light and posture requirement, store the current face and the age and sex of the current face in a database, and if the calculation result does not meet the light and posture requirement, obtain a matched face of the current face from the database, and determine an age and sex of the matched face as the age and sex of the current face.

An associated user determination process of the device for determining an associated user shown in Fig. 9 may refer to the corresponding part of the embodiment shown in Fig. 4a, Fig. 4b and Fig. 5, and will not be repeated here.

According to the embodiment, the manner of acquiring attribute information of an associated user is flexible, diversified and high in accuracy.

With respect to the devices in the above embodiments, the specific manners for individual modules and sub-modules therein to perform operations have been described in detail in the embodiments regarding the related methods, which will not be elaborated herein.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

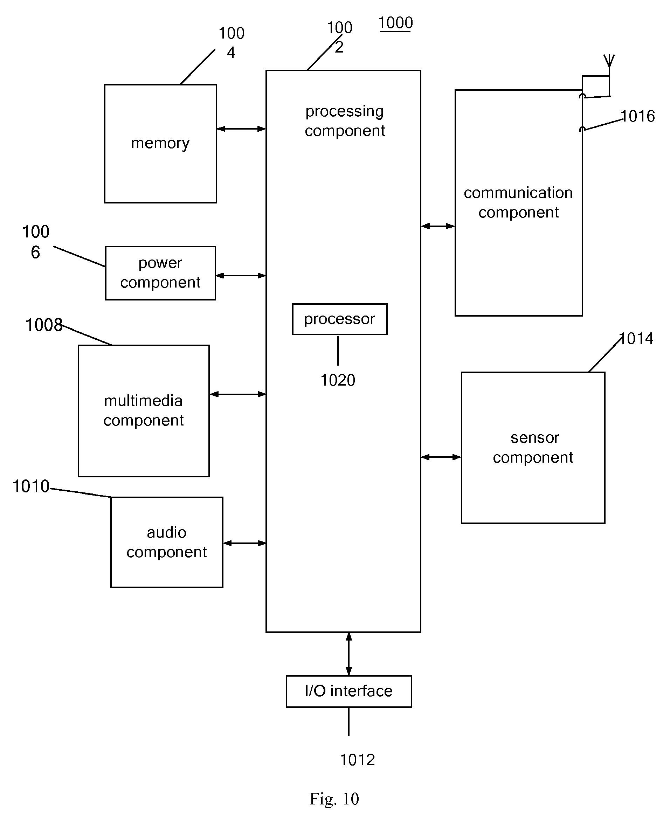

Fig. 10 is a block diagram of a determination device applicable to an associated user according to an exemplary embodiment. For example, the device 1000 may be a mobile phone, a computer, a digital broadcast terminal, a message transceiver, a games console, a tablet device, a medical device, fitness equipment, a personal digital assistant, an aircraft and the like.

Referring to Fig. 10, the device 1000 may include at least one of the following components: a processing component 1002, a memory 1004, a power source component 1006, a multimedia component 1008, an audio component 1010, an Input/Output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions so as to perform all or part of the steps in the abovementioned methods. Moreover, the processing component 1002 may include one or more modules which facilitate interaction between the processing component 1002 and other components. For instance, the processing component 1002 may include a multimedia module to facilitate interaction between the multimedia component 1008 and the processing component 1002.

The memory 1004 is configured to store various types of data so as to support operations in the device 1000. Examples of such data include instructions for any application or method operated on the device 1000, data of contacts, data of a phonebook, a message, a picture, a video, etc. The memory 1004 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power source component 1006 provides power for various components of the device 1000. The power source component 1006 may include a power management system, one or more power supplies, and other components associated with generation, management and distribution of power of the device 1000.

The multimedia component 1008 includes a screen providing an output interface between the device 1000 and a user. In some embodiments, the screen may include a Liquid Crystal Display (LCD) and a Touch Panel (TP). If the screen includes a TP, the screen may be implemented as a touch screen to receive an input signal from the user. The TP includes one or more touch sensors to sense a touch, a slide and a gesture on the TP. The touch sensors may not only sense a boundary of a touch or slide action, but also sense a duration and pressure associated with the touch or slide action. In some embodiments, the multimedia component 1008 includes a front camera and/or a rear camera. The front camera and/or the rear camera may receive external multimedia data when the device 1000 is in an operation mode, such as a photographing mode or a video mode. Each of the front camera and the rear camera may be a fixed optical lens system or provided with a focal length and an optical zooming capability.

The audio component 1010 is configured to output and/or input an audio signal. For example, the audio component 1010 includes a microphone (MIC), and the MIC is configured to receive an external audio signal when the device 1000 is in the operation mode, such as a call mode, a recording mode and a voice recognition mode. The received audio signal may be further stored in the memory 1004 or sent through the communication component 1016. In some embodiments, the audio component 1010 further includes a loudspeaker configured to output the audio signal.

The I/O interface 1012 provides an interface between the processing component 1002 and a peripheral interface module. The peripheral interface module may be a keyboard, a click wheel, buttons and the like. The buttons may include, but not limited to: a home button, a volume button, a starting button and a locking button.

The sensor component 1014 includes one or more sensors configured to provide status assessment in various aspects for the device 1000. For instance, the sensor component 1014 may detect an on/off status of the device 1000 and relative positioning of components, such as a display and a keypad of the device 1000, and the sensor component 1014 may further detect a change in a position of the device 1000 or a component of the device 1000, presence or absence of contact between the user and the device 1000, orientation or acceleration/deceleration of the device 1000 and a change in temperature of the device 1000. The sensor component 1014 may include a proximity sensor configured to detect presence of an object nearby without any physical contact. The sensor component 1014 may also include an optical sensor, such as a Complementary Metal Oxide Semiconductor (CMOS) or Charge Coupled Device (CCD) image sensor used in an imaging application. In some embodiments, the sensor component 1014 may also include an acceleration sensor, a gyroscope sensor, a magnetic sensor, a pressure sensor or a temperature sensor.

The communication component 1016 is configured to facilitate wired or wireless communication between the device 1000 and other devices. The device 1000 may access a communications-standard-based wireless network, such as a Wireless Fidelity (WiFi) network, a 2nd-Generation (2G) or 3rd-Generation (3G) network or a combination thereof. In an exemplary embodiment, the communication component 1016 receives a broadcast signal or broadcast-related information from an external broadcast management system through a broadcast channel. In an exemplary embodiment, the communication component 1016 may further include a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 1000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, so as to execute the abovementioned methods.

In an exemplary embodiment, there is also provided a non-transitory computer-readable storage medium including instructions, such as the memory 1004 including instructions, and the instructions may be executed by the processor 1020 of the device 1000 to implement the above-described methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of the embodiments of the present disclosure disclosed here. This application is intended to cover any variations, uses, or adaptations of the embodiments of the present disclosure following the general principles thereof and including such departures from the embodiments of the present disclosure as come within known or customary practice in the art. The specification and embodiments is to be considered as exemplary only, with the true scope and spirit of the embodiments of the present disclosure being indicated by the following claims.

It is to be appreciated that the embodiments of the present disclosure are not limited to the exact construction described above and illustrated in the accompanying drawings, and that various modifications and changes can be made without departing from the scope thereof. The scope of the embodiments of the present disclosure is only limited by the appended claims.

### INDUSTRY APPLICABILITY

According to embodiments of the present disclosure, a face album is acquired, a target user in the face album is determined, at least one candidate associated user of the target user is selected from the face album, then attribute information of the at least one candidate associated user is acquired, an associated user of the target user is determined according to the attribute information, and tag information is finally set for the associated user, so that the implementation process is rapid and simple, tedious operation of a user is avoided, and time is greatly saved for the user.

The manner of determining a candidate associated user is simple and easy to implement.

The manner of determining an associated user according to the attribute information of a candidate associated user is simple and easy to implement.

The manner of acquiring the attribute information of an associated user is simple and flexible.

The manner of determining an associated user according to a preset condition is simple and high in accuracy.

The sex and age information corresponding to all the faces of each candidate associated user is obtained, and then the sexes and age groups of the corresponding candidate associated users are determined according to the sex and age information corresponding to all the faces, so that high accuracy is achieved.

When a current face meets the light and posture requirement, the acquired age and sex are directly determined as the age and sex of the current face, and when the current face does not meet the light and posture requirement, a matched face of the current face is obtained from a database, and the age and sex of the matched face are determined as the age and sex of the current face, so that the accuracy of identification of the sex and age of the current face is ensured.

## Claims

1. A method for determining an associated user, comprising:
acquiring a face album (S100), the face album comprising face sets of multiple users, a face set of a user comprising a plurality of images that include the face of the user;
determining a target user having a face set within the face album, and screening the face album to select at least one candidate associated user of the target user from the face album (S102); and
acquiring attribute information of the at least one candidate associated user, determining an associated user of the target user according to the attribute information, and setting tag information for the associated user (S103).

2. The method for determining an associated user according to claim 1, wherein the screening the face album to select at least one candidate associated user of the target user from the face album comprises:
acquiring face source photos of all the users in the face album, the face source photos being photos containing one or more faces, including the face of the particular user, and comparing the acquired face source photos of users, except the target user, with face source photos of the target user; and
determining a user for whom the number of face source photos that are the same as those of the target user is more than a preset number, as the at least one candidate associated user.

3. The method for determining an associated user according to claim 1 or claim 2, wherein the acquiring attribute information of the at least one candidate associated user and determining an associated user of the target user according to the attribute information comprises:
acquiring sex and age information of the at least one candidate associated user, and removing from further consideration a candidate associated user not meeting an age requirement according to the age information; and
determining whether the number of remaining candidate associated users of a given sex exceeds a predetermined number or not according to the sex information of the remaining candidate associated users, and if the number of the remaining candidate associated users of a particular sex does not exceed the predetermined number, then determining the remaining candidate associated users as the associated users, otherwise, determining the associated users according to a preset condition.

4. The method for determining an associated user according to claim 3, wherein the acquiring sex and age information of the at least one candidate associated user comprises:
collecting training samples, extracting characteristics of the training samples, and training a classifier according to the characteristics, the characteristics comprising a gabor characteristic and the classifier comprising a Support Vector Machine, SVM, classifier (S401); and
acquiring sex and an age group of the at least one candidate associated user by the classifier (S402).

5. The method for determining an associated user according to claim 3 or 4, wherein the determining the associated user according to a preset condition comprises:
obtaining face number(s) of the remaining candidate associated user, and determining a candidate associated user with a largest face number as the associated user.

6. The method for determining an associated user according to claim 4 or 5, wherein the acquiring sex and an age group of the at least one candidate associated user by the classifier comprises:
for each face source photo of each candidate associated user, acquiring an age of each face of the current candidate associated user by the classifier, acquiring the time of taking the photo corresponding to the each face (S4031), calculating a birth time corresponding to each face according to the age and the time of taking the photo (S4032), and determining an age group to which the current candidate associated user belongs according to the calculated birth time (S4033); and
for each face source photo of each candidate associated user, acquiring sex corresponding to each face of the current candidate associated user by the classifier, determining the acquired sex as sex of the current candidate associated user if the acquired sex(es) is(are) the same, and if the acquired sexes are different, then determining a statistic on the numbers of faces corresponding to different sexes of the current candidate associated user and determining the sex of the current candidate associated user as that corresponding to the sex determined for the larger number of faces of the current candidate associated user.

7. The method for determining an associated user according to claim 6, wherein the acquiring age and sex of each face of a current candidate associated user by the classifier comprises:
for the each face of the current candidate associated user, acquiring age and sex of a current face of the current candidate associated user, calculating light and posture information of the current face(S501), determining the acquired age and sex as age and sex of the current face if a calculation result meets a light and posture requirement, storing the current face and the age and sex of the current face in a database(S502,503), and if the calculation result does not meet the light and posture requirement, then obtaining a matched face of the current face from the database, and determining age and sex of the matched face as the age and sex of the current face (S502,504).

8. A device for determining an associated user, comprising:
an acquisition module (61), configured to acquire a face album, the face album comprising face sets of multiple users, a face set of a user comprising a plurality of images that include the face of the user;
a determination and screening module(62), configured to determine a target user having a face set within the face album acquired by the acquisition module, and screening the face album to select at least one candidate associated user of the target user from the face album; and
a determination and setting module(63), configured to acquire attribute information of the at least one candidate associated user screened out by the determination and screening module, determine an associated user of the target user according to the attribute information, and set tag information for the associated user.

9. The device for determining an associated user according to claim 8, wherein the determination and screening module comprises:
an acquisition and comparison sub-module(621), configured to acquire face source photos of all the users in the face album, the face source photos being photos containing one or more faces, including the face of the particular user, and compare the acquired face source photos of users except the target user with face source photos of the target user; and
a determination sub-module(622), configured to determine a user for whom the number of face source photos that are the same as those of the target user is more than a preset number as the at least one candidate associated user.

10. The device for determining an associated user according to claim 8 or 9, wherein the determination and setting module comprises:
an acquisition and deletion sub-module(631), configured to acquire sex and age information of the at least one candidate associated user, and delete a candidate associated user not meeting an age requirement according to the age information; and
a judgment and determination sub-module(632), configured to determine whether the number of remaining candidate associated users of a given sex exceeds a predetermined number or not according to the sex information of the remaining candidate associated users, and if the number of the remaining candidate associated users of a particular sex does not exceed the predetermined number, then determine the remaining candidate associated users as the associated users, otherwise, determine the associated users according to a preset condition.

11. The device for determining an associated user according to claim 10, wherein the acquisition and deletion sub-module comprises:
a collection, extraction and training unit(6311), configured to collect training samples, extract characteristics of the training samples, and train a classifier according to the characteristics, the characteristics comprising a gabor characteristic and the classifier comprising a Support Vector Machine, SVM, classifier; and
an acquisition unit(6312), configured to acquire sex and an age group of the at least one candidate associated user by the classifier trained by the collection, extraction and training unit.

12. The device for determining an associated user according to claim 10 or 11, wherein the judgment and determination sub-module is configured to:
obtain face number(s) of the remaining candidate associated user, and determine a candidate associated user with a largest face number as the associated user.

13. The device for determining an associated user according to claim 11 or 12, wherein the acquisition unit is configured to:
for each face source photo of each candidate associated user, acquire an age of each face of a current candidate associated user by the classifier, acquire the time of taking the photo corresponding to the each face, calculate a birth time corresponding to the each face according to the age and the time of taking the photo, and determine an age group to which the current candidate associated user belongs according to the calculated birth time; and
for each face source photo of each candidate associated user, acquire sex corresponding to the each face of the current candidate associated user by the classifier, determine the acquired sex as sex of the current candidate associated user if the acquired sex(es) is (are) the same, and if the acquired sexes are different, then determining a statistic on the number of faces, corresponding to different sexes, of the current candidate associated user and determine the sex of the current candidate associated user as that corresponding to the sex determined for the larger number of faces of the current candidate associated user.

14. The device for determining an associated user according to claim 13, wherein the acquisition unit is configured to:
for the each face of the current candidate associated user, acquire age and sex of a current face of the current candidate associated user, calculate light and posture information of the current face, determine the acquired age and sex as age and sex of the current face if a calculation result meets a light and posture requirement, store the current face and the age and sex of the current face in a database, and if the calculation result does not meet the light and posture requirement, obtain a matched face of the current face from the database, and determine an age and sex of the matched face as the age and sex of the current face.

15. A device for determining an associated user, comprising:
a processor; and
a memory configured to store executable instructions of the processor,
wherein the processor is configured to carry out the method of any of claims 1 to 7.
